(19) **Europäisches Patentamt / European Patent Office / Office européen des brevets**

(11) **EP 1 931 071 A1**

(12) **EUROPEAN PATENT APPLICATION**
published in accordance with Art. 153(4) EPC

(43) Date of publication:
**11.06.2008 Bulletin 2008/24**

(51) Int Cl.:
*H04J 15/00* (2006.01)  *H04B 7/04* (2006.01)
*H04J 11/00* (2006.01)

(21) Application number: **06822934.3**

(22) Date of filing: **02.11.2006**

(86) International application number:
**PCT/JP2006/322016**

(87) International publication number:
**WO 2007/052768 (10.05.2007 Gazette 2007/19)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.11.2005 JP 2005321562**

(71) Applicant: **MATSUSHITA ELECTRIC INDUSTRIAL CO., LTD.**
**Kadoma-shi**
**Osaka 571-8501 (JP)**

(72) Inventors:
• **IMAI, Tomohiro**
**c/o Matsushita Electric Industrial Co.Ltd**
**2-1-61, Shiromi, Chuo-ku**
**Osaka 540-6207 (JP)**

• **HOSHINO, Masayuki**
**c/o Matsushita Electric Industrial Co.Ltd**
**2-1-61, Shiromi, Chuo-ku**
**Osaka 540-6207 (JP)**
• **YUDA, Yasuaki**
**c/o Matsushita Electric Industrial Co.Ltd**
**2-1-61, Shiromi, Chuo-ku**
**Osaka 540-6207 (JP)**
• **MIYOSHI, Kenichi**
**c/o Matsushita Electric Industrial Co.Ltd**
**2-1-61, Shiromi, Chuo-ku**
**Osaka 540-6207 (JP)**

(74) Representative: **Grünecker, Kinkeldey, Stockmair & Schwanhäusser**
**Anwaltssozietät**
**Leopoldstrasse 4**
**80802 München (DE)**

(54) **RADIO TRANSMITTING APPARATUS, RADIO RECEIVING APPARATUS, WIRELESS COMMUNICATION METHOD, AND WIRELESS COMMUNICATION SYSTEM**

(57)     A radio transmitting apparatus, a radio receiving apparatus, a wireless communication method and a wireless communication system wherein even when a channel correlation is large, the channel capacity and the feedback amount can be improved. In ST401, a receiving apparatus (200) determines that the channel correlation value exceeds a predetermined threshold value. InST402, a transmitting apparatus (100) is instructed to perform 42 MIMO transmission. In ST403, the transmitting apparatus (100) determines a pair of antennas exhibiting the highest channel correlation. In ST406, the receiving apparatus (200) uses, based on the pair information, a channel matrix, which comprises channel estimation values, to calculate a delay shift amount. In ST407, the delay shift amount is fed back to the transmitting apparatus (100). In ST408, the transmitting apparatus (100) uses the pair information and delay shift amount to combine SDM and a cyclic sample delay diversity, thereby transmitting data.

FIG.10

## Description

Technical Field

The present invention relates to a wireless transmitting apparatus, a wireless receiving apparatus, a wireless communication method and a wireless communication system in a MIMO system in which signals transmitted from a plurality of transmitting antennas are received through a plurality of receiving antennas.

Background Art

In the field of wireless cellular systems, which are represented by, for example, mobile phones, service modes become diverse, and transmitting large capacity data such as still images and movies in addition to voice data is in demand in recent years. On the other hand, a MIMO (Multiple Input Multiple Output) system which has high spectrum efficiency is studied actively.

Especially in 3GPP LTE (3rd Generation Partnership Project Long Term Evolution), which standardizes next generation wireless cellular systems, a peak rate of 100 Mbps on downlink is required, and, as a technique for realizing this, studies are being conducted for implementing a MIMO system.

SDM (Space Division Multiplex) scheme is one of techniques to improve transmission rate in MIMO communication systems. The SDM scheme realizes the transmission rates of equivalent times of the number of transmitting antennas compared with a SISO (Single Input Single Output) system by transmitting respective different signals from a plurality of antennas simultaneously and by spatially multiplexing. Incidentally, the receiving side needs to acquire channel (propagation path) information between transmitting antennas and receiving antennas and to perform signal separation processing.

In 3GPP LTE, a system basically adopts the configuration ($2 \times 2$) where a base station has two antennas and a mobile station has two antennas, and a base station can have more antennas than a mobile station, so that studies are also being conducted for the configuration ($4 \times 2$) where a base station has four antennas and a mobile station has two antennas. Combining a $4 \times 2$ antenna configuration and closed loop control makes it possible to realize higher transmission rate than a $2 \times 2$ antenna configuration.

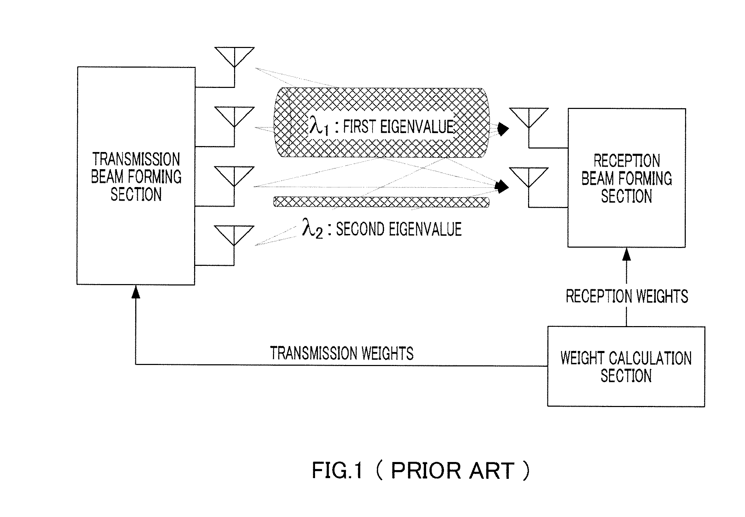

As a technique combining a MIMO system of a $4 \times 2$ antenna configuration and closed loop control, for example, eigenmode transmission disclosed in Patent Document 1 is generally known. Eigenmode transmission performs beamforming by multiplying weights at both the transmitting and receiving side as shown in FIG.1. These weights are derived from eigenvalue decomposition of a correlation matrix of a channel matrix provided with channel estimation value estimated by pilot symbols at the receiving side. Transmission weights are fed back to the transmitting side through a feedback channel.

Patent Document 1: Japanese Patent Application Laid-Open No.2003-528527

Non-patent Document 1: "Method of Constituting MIMO Communication System" Triceps seminar textbook, July, 2004

Disclosure of Invention

Problems to be Solved by the Invention

However, the eigenmode transmission described above has a problem that channel capacity is decreased and sufficient transmission rate is not acquired when channel correlation (in other words, fading correlation or space correlation) is greater. Moreover, there is a problem that it is necessary to feed back weights to the transmitting side, and so, the amount of computing and feedback is increased compared with closed loop system in order.

Specifically explaining the $4 \times 2$ MIMO eigenmode transmission shown in FIG.1 as an example, a second eivenvalue is decreased in two eigenvalues (a first eigenvalue and a second eigenvalue) when the channel correlation is higher, and so, received quality of a second stream is deteriorated. As a result, channel capacity is deteriorated.

Non-patent Document 1 shows the relationship between channel correlation and channel capacity loss, and discloses that, when channel correlation is 0.76, SNR (Signal to Noise Ratio) is 10 dB and about 20% of channel capacity loss is produced.

It is therefore an object of the present invention to provide a wireless transmitting apparatus, a wireless receiving apparatus, a wireless communication method and a wireless communication system for improving channel capacity and amounts of feedback even when channel correlation is high.

Means for Solving the Problem

The wireless transmitting apparatus of the present invention adopts a configuration including: a plurality of transmitting antennas; a converting section that converts a transmission signal into transmission signals of a plurality of sequences; a transmission controlling section that duplicates the transmission signals of the plurality of sequences on a per sequence basis; a delay processing section that performs cyclic delay processing of the duplicated transmission signals; and a transmitting section that respectively transmits the transmission signals of duplicated sources and the transmission signals to which the cyclic delay processing is applied, from the transmitting antennas.

The wireless receiving apparatus of the present invention adopts a configuration including: a channel estimating section that performs a channel estimation using pilots transmitted from a transmitting apparatus which is a communicating party; and an antenna pair determining section that determines a pair of the transmission antennas with a highest channel correlation calculated from a channel estimation value and feeds back pair information showing the determined pair of antennas to the transmitting apparatus.

Advantageous Effect of the Invention

According to the present invention, even when channel correlation is high, it is possible to improve channel capacity and amounts of feedback.

Brief Description of Drawings

FIG.1 illustrates a conceptual diagram showing $4 \times 2$ MIMO eigenmode transmission;

FIG.2 is a block diagram showing a configuration of the transmitting apparatus according to Embodiment 1 of the present invention;

FIG.3 is a table showing the combinations of antenna pairs;

FIG.4 illustrates an example of the connections of the control switch in the antenna pair controlling section shown in FIG.2;

FIG.5 explains cyclic sample delay processing in the delay processing section shown in FIG.2;

FIG.6 is a block diagram showing a configuration of the receiving apparatus according to Embodiment 1 of the present invention;

FIG.7 is a block diagram showing the internal configuration of the delay shift amount computing section shown in FIG.6;

FIG.8 illustrates the channels formed between transmitting antennas and receiving antennas;

FIG.9 is a graph showing an example of evaluation function $J(\tau_1, \tau_2)$ ;

FIG.10 illustrates a sequence diagram showing the steps of communications between the transmitting apparatus shown in FIG. 2 and the receiving apparatus shown in FIG.6;

FIG.11 is a block diagram showing a configuration of the transmitting apparatus according to Embodiment 2 of the present invention;

FIG.12 is a block diagram showing a configuration of the receiving apparatus according to Embodiment 2 of the present invention;

FIG.13 is a flow chart showing antenna pair deciding steps in the antenna pair determining section shown in FIG.12;

FIG.14 illustrates a sequence diagram showing the steps of communications between the transmitting apparatus shown in FIG.11 and the receiving apparatus shown in FIG.12;

FIG.15 is a block diagram showing a configuration of the transmitting apparatus according to Embodiment 3 of the present invention;

FIG.16 is a block diagram showing a configuration of the receiving apparatus according to Embodiment 3 of the present invention;

FIG.17 is a table showing the relationship between the channel estimation information and the indicators;

FIG.18 is a flow chart showing the antenna pair deciding steps in the antenna pair determining section;

FIG.19 illustrates a sequence diagram showing the steps of communications between the transmitting apparatus shown in FIG.15 and the receiving apparatus shown in FIG.16;

FIG.20 is a block diagram showing a configuration of the transmitting apparatus according to Embodiment 4 of the present invention;

FIG.21 illustrates a sequence diagram showing the steps of communications between the transmitting apparatus and the receiving apparatus according to Embodiment 4; and

FIG.22 explains the method of combinations of cyclic sample delay diversity and SDM.

Best Mode for Carrying Out the Invention

Now, embodiments of the present invention will be described in detail with reference to the accompanying drawings. Embodiments of the present invention will be described presuming a 4 × 2 MIMO systemwhere a transmitting apparatus has four antennas and a receiving apparatus has two antennas. Further, in embodiments, the same components having the same functions will be assigned the same reference numerals and overlapping descriptions will be omitted.

(Embodiment 1)

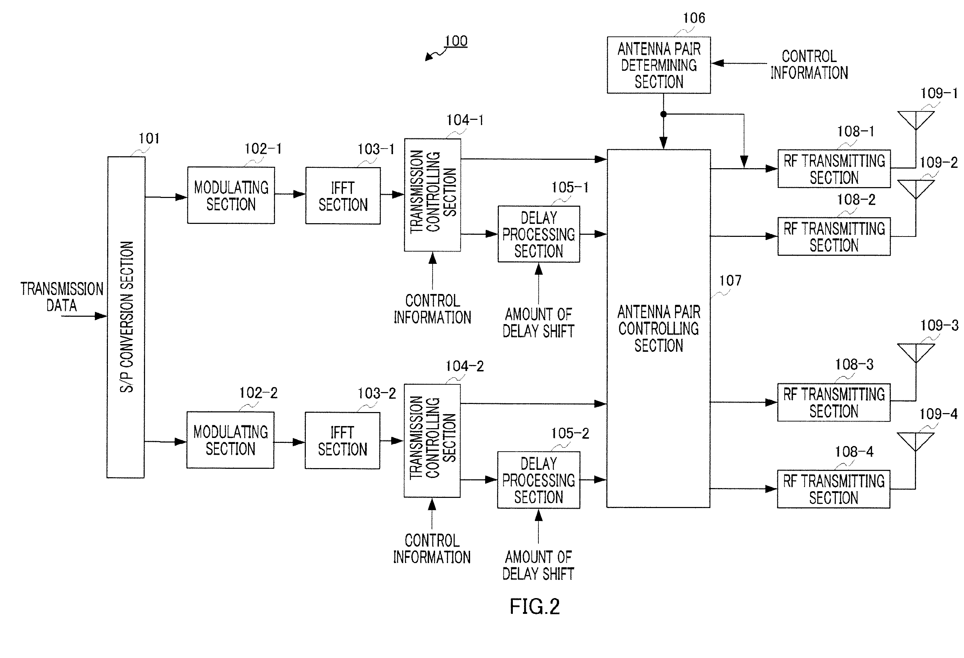

FIG.2 is a block diagram showing the configuration of transmitting apparatus 100 according to Embodiment 1 of the present invention. In this figure, S/P conversion section 101 converts inputted transmission data from a serial signal into parallel signals of two sequences and outputs the transmission data of the sequences to modulating sections 102-1 and 102-2.

Modulating sections 102-1 and 102-2 perform modulating processing of the transmission data outputted from S/P conversion section 101 and output the modulated signals to IFFT sections 103-1 and 103-2, respectively.

IFFT sections 103-1 and 103-2 perform IFFT (Inverse Fast Fourier Transform) processing of the modulated signals outputted from modulating sections 102-1 and 102-2, convert frequency domain signals into time domain signals, and form OFDM signals. The OFDM signals are outputted to corresponding transmission controlling sections 104-1 and 104-2, respectively.

Transmission controlling sections 104-1 and 104-2 acquire control information commanding 4 × 2 MIMO transmission or 2 × 2 MIMO transmission from receiving apparatus 200, which will be explained later. When the acquired control information commands 2 × 2 MIMO transmission, transmission controlling sections 104-1 and 104-2 output the OFDM signals outputted from IFFT sections 103-1 and 103-2, directly to antenna pair controlling section 107. Moreover, when the acquired control information commands 4 × 2 MIMO transmission, transmission controlling sections 104-1 and 104-2 each duplicate the OFDM signal outputted from IFFT section 103-1 or 103-2, and output one of the same two OFDM signals to antenna pair controlling section 107 and the other to corresponding delay processing section 105-1 or 105-2.

Delay processing sections 105-1 and 105-2 acquire the amount of delay shift from receiving apparatus 200, which will be explained later, and, based on the amount of delay shift, apply a cyclic sample delay to the OFDM signals outputted from transmission controlling sections 104-1 and 104-2. The OFDM signals to which the cyclic sample delay is applied are outputted to antenna pair controlling section 107. Delay processing sections 105-1 and 105-2 will be described in detail later.

Antenna pair determining section 106 acquires control information commanding 4 × 2 MIMO transmission or 2 × 2 MIMO transmission from receiving apparatus 200, which will be explained later. When the acquired control information commands 2 × 2 MIMO transmission, antenna pair determining section 106 outputs pair information designating two antennas set in advance, to antenna pair controlling section 107.

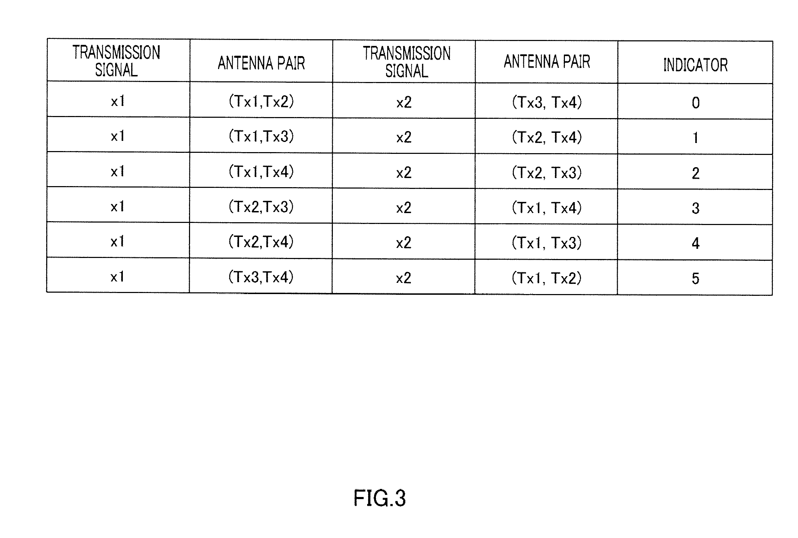

Moreover, when the acquired control information commands 4 × 2 MIMO transmission, antenna pair determining section 106 selects the antenna pair with the highest channel correlation in the combinations of antenna pairs provided in advance (see FIG.3), outputs the pair information to antenna pair controlling section 107 and to receiving apparatus 200. Incidentally, in FIG.3, Tx1 to Tx4 correspond to antennas 109-1 to 109-4, respectively, and indicators 0 to 5 are equivalent to pair information.

In transmitting apparatus 100, the state of arranging antennas 109-1 to 109-4 is already known, so that it is possible to find the distance between two given antennas among these four antennas. Generally, channel correlation of an antenna pair increases when the distance between the two antennas is shorter. Accordingly, to select the antenna pair with the highest channel correlation, transmitting apparatus 100 finds the distance between the two antennas of two antenna pairs of indicators 0 to 5, and selects the indicator giving the minimum total, as the pair information. Cyclic sample delay diversity is assumed to be used in a state of high channel correlation, and so (TxA, TxB) = (TxB, TxA) may be used.

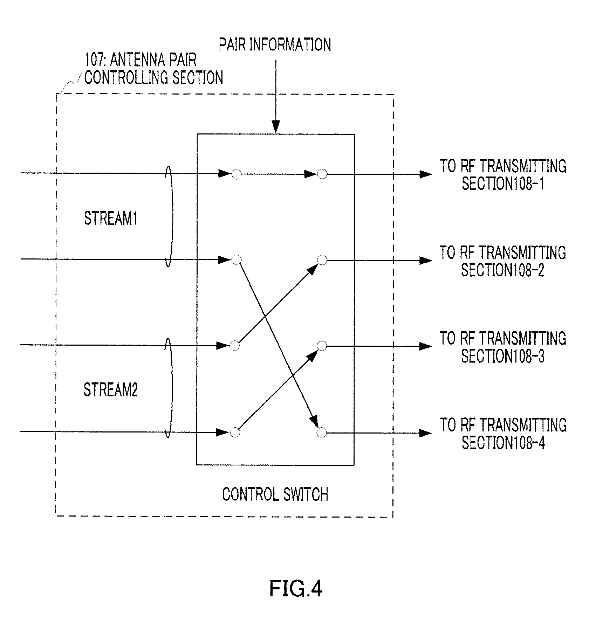

Based on the pair information outputted from antenna pair determining section 106, antenna pair controlling section 107 assigns to antennas 109-1 to 109-4 the OFDM signals outputted from transmission controlling sections 104-1 and 104-2 and the OFDM signals to which the cyclic sample delay is applied when the OFDM signals are outputted from delay processing sections 105-1 and 105-2. Antenna pair controlling section 107 can also be realized, for example, by a control switch that switches the connection between an input terminal and an output terminal. In this case, upon inputting indicator 2 shown in FIG.3, antenna pair controlling section 107 enters the connection mode as shown in FIG. 4 and can assign the OFDM signals to the designated antennas. The OFDM signals are respectively outputted to RF transmitting sections 108-1 to 108-4 corresponding to the assigned antennas.

RF transmitting sections 108-1 to 108-4 perform predetermined radio transmission processing such as D/A conversion and up-conversion of the OFDM signals outputted from antenna pair controlling section 107, and transmit the signals after radio transmission processing to receiving apparatus 200 via corresponding antennas 109-1 to 109-4.

Next, delay processing sections 105-1 and 105-2 described above will be explained in detail. If the i-th OFDM symbol is $x_i(n)$, where $0 \le n \le N\text{-}1$ (N: the number of FFT points) first, an OFDM symbol to which the cyclic sample delay is applied is $z_i(n)$ and the amount of delay shift acquired from receiving apparatus 200 is $\tau$, the following equation 1 holds:

[1]

$$z_i(n) = x_i(n - \tau)_N \quad \ldots(\text{Equation 1})$$

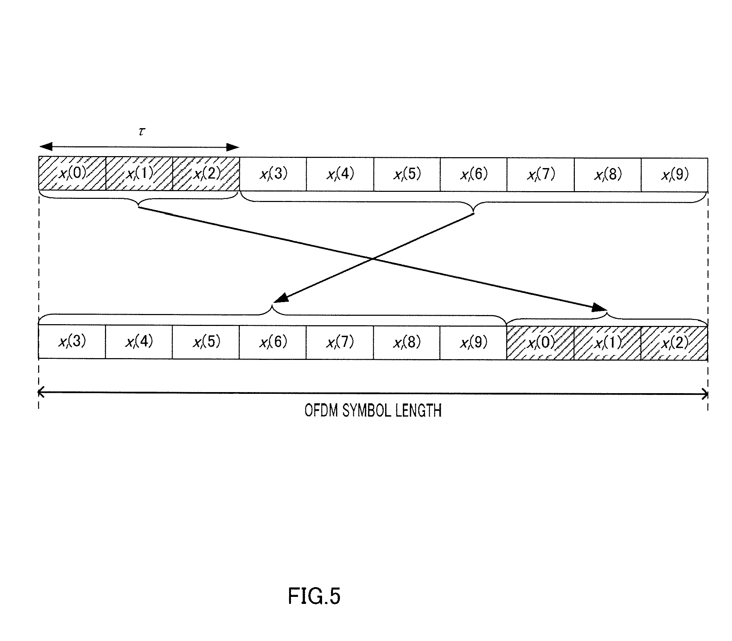

Here, $(n)_N$ means n mod N, and, for example, $(n - d)_N = n + N - d$, where $0 \le d \le N\text{-}1$. FIG.5 shows the state of the cyclic sample delay processing when N is 10 and $\tau$ is 3.

As shown in FIG. 5, delay processing sections 105-1 and 105-2 extract $x_i(0)$, $x_i(1)$ and $x_i(2)$, and add these three samples to $x_i(9)$. That is, delay processing sections 105-1 and 105-2 extract $\tau$ samples from the top of the OFDM symbol and add the extracted $\tau$ samples to the tail of that OFDM symbol.

Here, in the OFDM symbol, the cyclic delay in the time domain is equivalent to phase rotation in the frequency domain, and, if the Fourier transforms of $x_i(n)$ and $z_i(n)$ are $X_i(f)$ and $Z_i(f)$, respectively, the following relationship holds between these.

[2]

$$Z_i(f) = X_i(f)\exp(-j2\pi f\tau/N) \quad \ldots(\text{Equation 2})$$

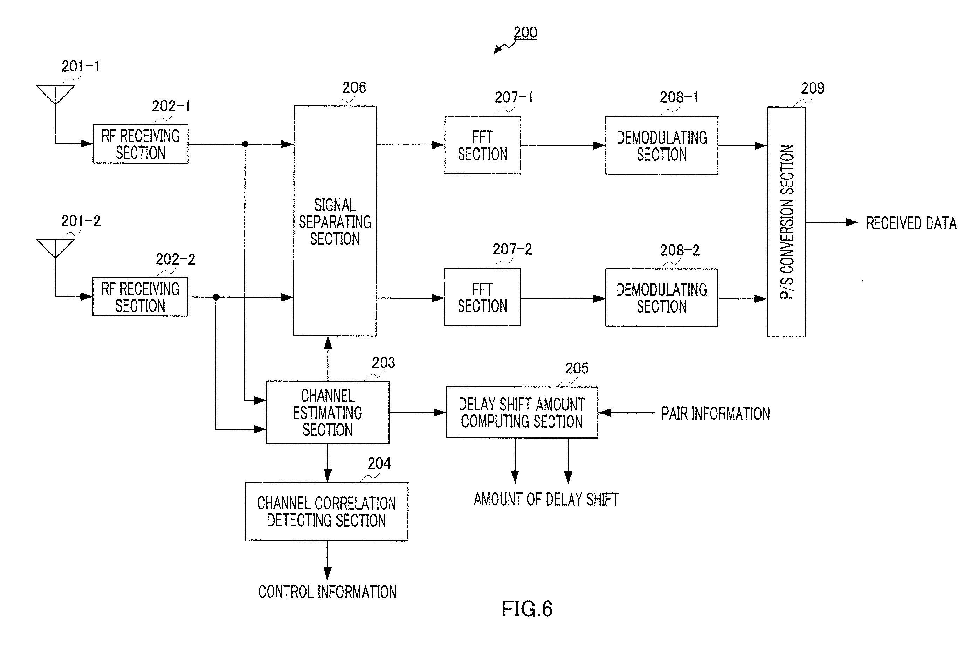

FIG. 6 is a block diagram showing the configuration of receiving apparatus 200 according to Embodiment 1 of the present invention. In this figure, RF receiving sections 202-1 and 202-2 respectively receive signals transmitted from transmitting apparatus 100 shown in FIG.2 via corresponding antennas 201-1 and 201-2, perform predetermined radio receiving processing including down-conversion of the received signals, and extract the pilot signals from the received signals. RF receiving sections 202-1 and 202-2 output the data signals in the received signals subjected to radio receiving processing and output the extracted pilot signals to channel estimating section 203.

Channel estimating section 203 performs a channel estimation based on the pilot signals outputted from RF receiving sections 202-1 and 202-2 and outputs channel estimation information to channel correlation detecting section 204, delay shift amount computing section 205 and signal separating section 206.

Channel correlation detecting section 204 calculates a channel correlation value using the channel estimation information outputted from channel estimating section 203, and detects whether or not the calculated channel correlation value exceeds a predetermined threshold. When the channel correlation value exceeds the predetermined threshold, channel correlation detecting section 204 generates control information commanding 4x2 MIMO transmission, and, when the channel correlation value is equal to or lower than the predetermined threshold, channel correlation detecting section 204 generates control information commanding $2 \times 2$ MIMO transmission. The generated control information is transmitted to transmitting apparatus 100 shown in FIG.2.

Delay shift amount computing section 205 acquires the pair information from transmitting apparatus 100 shown in FIG.2, and calculates the amount of delay shift for each stream based on the pair information and the channel estimation information outputted from channel estimating section 203. The calculated amount of delay shift is fed back to transmitting apparatus 100. Delay shift amount computing section 205 will be described in detail later.

Using the channel estimation information outputted from channel estimating section 203, signal separating section 206 performs zero forcing or MMSE processing of the received signals outputted from RF receiving sections 202-1 and 202-2 and separates the received signals on a per stream basis. The separated signals are outputted to FFT sections 207-1 and 207-2 on a per stream basis.

FFT sections 207-1 and 207-2 perform FFT (Fast Fourier Transform) of the signals outputted from signal separating section 206 and convert the time domain signals into frequency domain signals. Demodulating sections 208-1 and 208-2 demodulate the signals outputted from corresponding FFT sections 207-1 and 207-2, respectively, and, by converting the demodulated parallel signals of two sequences into a serial signal of one sequence, P/S conversion section 209 acquires the received data.

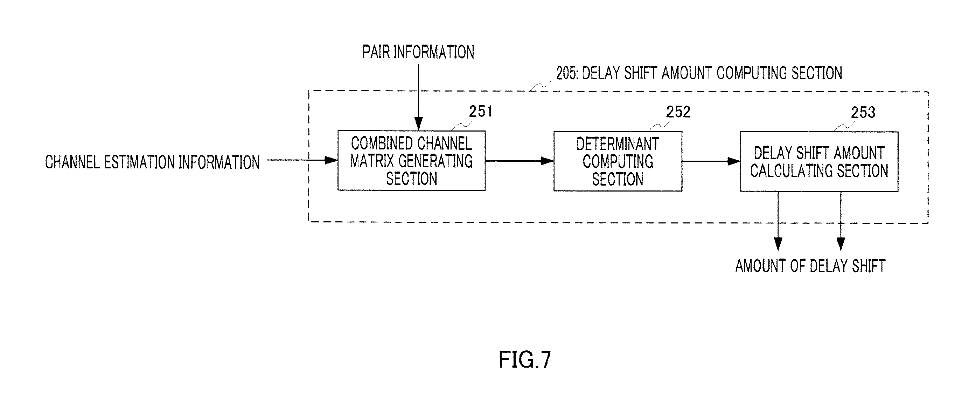

FIG.7 is a block diagram showing the internal configuration of delay shift amount computing section 205 shown in FIG.6. In this figure, based on the pair information acquired from transmitting apparatus 100, combined channel matrix generating section 251 generates a $2 \times 2$ combined channel matrix including two amounts of delay shift to be obtained, from the channel estimation information outputted from channel estimating section 203, and outputs the generated combined channel matrix to determinant computing section 252.

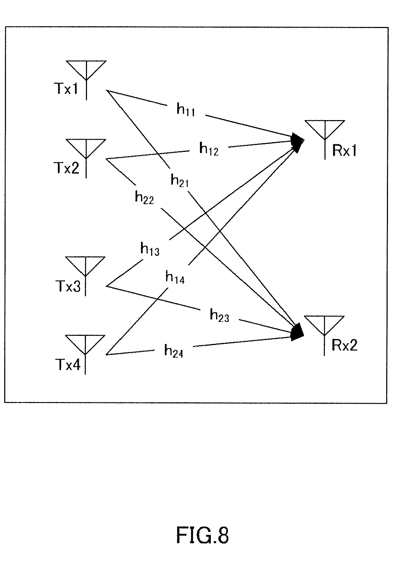

Here, for the sake of convenience, if antennas 109-1 to 109-4 of transmitting apparatus 100 are Tx1 to Tx4, respectively, and, if antennas 201-1 and 201-2 of receiving apparatus 200 are Rx1 and Rx2, respectively, the channels formed between the antennas are as shown in FIG.8. That is, the channel formed between Tx1 and Rx1 is $h_{11}$, and the channel formed between Tx1 and Rx2 is $h_{21}$. Similarly, the channel formed between Tx2 and Rx1 is $h_{12}$, and the channel formed between Tx2 and Rx2 is $h_{22}$. Moreover, the channel formed between Tx3 and Rx1 is $h_{13}$, and the channel formed between Tx3 and Rx2 is $h_{23}$. Furthermore, the channel formed between Tx4 and Rx1 is $h_{14}$, and the channel formed between Tx4 and Rx2 is $h_{24}$. At this time, the channel estimation information in the time domain is represented by the following equation 3:

[ 3 ]

$$H(n) = \begin{bmatrix} h_{11}(n) & h_{12}(n) & h_{13}(n) & h_{14}(n) \\ h_{21}(n) & h_{22}(n) & h_{23}(n) & h_{24}(n) \end{bmatrix} \quad \cdots (\text{Equation } 3)$$

The subscript i representing the OFDM symbol number is omitted in equation 3 above.

Moreover, the channel estimation information in the frequency domain is represented by the following equation 4:

[ 4 ]

$$H(f) = \begin{bmatrix} H_{11}(f) & H_{12}(f) & H_{13}(f) & H_{14}(f) \\ H_{21}(f) & H_{22}(f) & H_{23}(f) & H_{24}(f) \end{bmatrix} \quad \cdots (\text{Equation } 4)$$

Here, $H_{ij}(f)$ (i = 1 to 2, j = 1 to 4) represents Fourier transform of each element of channel estimation information, $h_{ij}(n)$ (i = 1 to 2, j = 1 to 4).

If the two amounts of delay shift are $\tau 1$ and $\tau 2$, the $2 \times 2$ combined channel matrices $H_{comb}(n)$ generated based on the combinations of antenna pairs shown in FIG.3, are respectively represented as follows:

(1) If the indicator is 0:

[ 5 ]

$$H_{comb}^{(0)}(f) = \begin{bmatrix} H_{11}(f) + H_{12}(f)e^{-j2\pi f\tau_1/N} & H_{13}(f) + H_{14}(f)e^{-j2\pi f\tau_2/N} \\ H_{21}(f) + H_{22}(f)e^{-j2\pi f\tau_1/N} & H_{23}(f) + H_{24}(f)e^{-j2\pi f\tau_2/N} \end{bmatrix}$$

$$\cdots (\text{Equation } 5)$$

(2) If the indicator is 1:

[6]

$$H^{(1)}_{comb}(f) = \begin{bmatrix} H_{11}(f) + H_{13}(f)e^{-j2\pi f\tau_1/N} & H_{12}(f) + H_{14}(f)e^{-j2\pi f\tau_2/N} \\ H_{21}(f) + H_{23}(f)e^{-j2\pi f\tau_1/N} & H_{22}(f) + H_{24}(f)e^{-j2\pi f\tau_2/N} \end{bmatrix}$$

...(Equation 6)

(3) If the indicator is 2:

[7]

$$H^{(2)}_{comb}(f) = \begin{bmatrix} H_{11}(f) + H_{14}(f)e^{-j2\pi f\tau_1/N} & H_{12}(f) + H_{13}(f)e^{-j2\pi f\tau_2/N} \\ H_{21}(f) + H_{24}(f)e^{-j2\pi f\tau_1/N} & H_{22}(f) + H_{23}(f)e^{-j2\pi f\tau_2/N} \end{bmatrix}$$

...(Equation 7)

(4) If the indicator is 3:

[8]

$$H^{(3)}_{comb}(f) = \begin{bmatrix} H_{12}(f) + H_{13}(f)e^{-j2\pi f\tau_1/N} & H_{11}(f) + H_{14}(f)e^{-j2\pi f\tau_2/N} \\ H_{22}(f) + H_{23}(f)e^{-j2\pi f\tau_1/N} & H_{21}(f) + H_{24}(f)e^{-j2\pi f\tau_2/N} \end{bmatrix}$$

...(Equation 8)

(5) If the indicator is 4:

[9]

$$H^{(4)}_{comb}(f) = \begin{bmatrix} H_{12}(f) + H_{13}(f)e^{-j2\pi f\tau_1/N} & H_{11}(f) + H_{14}(f)e^{-j2\pi f\tau_2/N} \\ H_{22}(f) + H_{23}(f)e^{-j2\pi f\tau_1/N} & H_{21}(f) + H_{24}(f)e^{-j2\pi f\tau_2/N} \end{bmatrix}$$

...(Equation 9)

(6) If the indicator is 5:

[10]

$$H^{(5)}_{comb}(f) = \begin{bmatrix} H_{13}(f) + H_{14}(f)e^{-j2\pi f\tau_1/N} & H_{11}(f) + H_{12}(f)e^{-j2\pi f\tau_2/N} \\ H_{23}(f) + H_{24}(f)e^{-j2\pi f\tau_1/N} & H_{21}(f) + H_{22}(f)e^{-j2\pi f\tau_2/N} \end{bmatrix}$$

...(Equation 10)

Determinant computing section 252 calculates a channel determinant from the combined channel matrix out putted from combined channel matrix generating section 251. If the channel determinant to be obtained is det{$H_{comb}$ (f) }, and, if the combined channel matrix generated in indicator 0 in combined channel matrix generating section 251, is used, the specific calculation method is represented by the following equation 11:

[11]

$$\det\{\mathbf{H}_{comb}(f)\} = \{H_{11}(f) + H_{12}(f)e^{-j2\pi f\tau_1/N}\}\{H_{23}(f) + H_{24}(f)e^{-j2\pi f\tau_2/N}\} \\ - \{H_{13}(f) + H_{14}(f)e^{-j2\pi f\tau_2/N}\}\{H_{21}(f) + H_{22}(f)e^{-j2\pi f\tau_1/N}\}$$

...(Equation 11)

The calculated channel determinant is outputted to delay shift amount calculating section 253.

Delay shift amount calculating section 253 defines the channel determinant outputted from determinant computing section 252 as an evaluation function and calculates the amounts of delay shift which maximize this evaluation function. If the evaluation function is $J(\tau_1,\tau_2)$ here, $J(\tau_1,\tau_2)$ is the value that sums the channel dominants for all subcarriers in an OFDM symbol, and the evaluation function is represented by the following equation 12:

[12]

$$J(\tau_1,\tau_2) = \sum_f \left| \begin{array}{c} \{H_{11}(f) + H_{12}(f)e^{-j2\pi f\tau_1/N}\}\{H_{23}(f) + H_{24}(f)e^{-j2\pi f\tau_2/N}\} \\ - \{H_{13}(f) + H_{14}(f)e^{-j2\pi f\tau_2/N}\}\{H_{21}(f) + H_{22}(f)e^{-j2\pi f\tau_1/N}\} \end{array} \right|$$

...(Equation 12)

If the cyclic prefix length of an OFDM symbol is $L_{cp}$, the amounts of delay shift to be obtained are τ1 and τ2 which maximize the evaluation function $J(\tau_1,\tau_2)$ of equation 12, between $L_{cp}$+1 and the number of FFT points N. The amounts of obtained delay shift are fed back to transmitting apparatus 100.

Although an example has been shown with equations 11 and 12 above where the indicator is 0, other indicators can also be calculated in the same way.

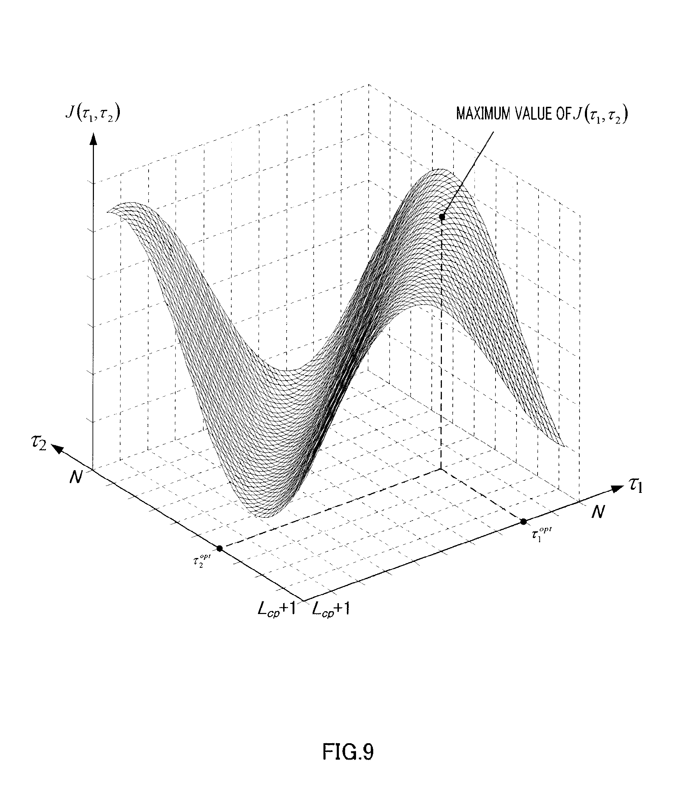

FIG. 9 shows an example of the evaluation function J ($\tau_1$, $\tau_2$). Now, if the amounts of delay shift to be obtained are $\tau^{OPT}_1$ and $\tau^{OPT}_2$, respectively, deriving $\tau^{OPT}_1$ and $\tau^{OPT}2$ results in the maximum problem of a function with two variables. Consequently, $\tau^{OPT}_1$ and $\tau^{OPT}_2$ can be obtained as shown below by solving the equation obtained as 0 by partial differentiating the evaluation function $J(\tau_1,\tau_2)$ with respect to $\tau_1$ and $\tau_2$, respectively.

[13]

$$\frac{\partial J(\tau_1,\tau_2)}{\partial \tau_1} = \frac{\partial J(\tau_1,\tau_2)}{\partial \tau_2} = 0 \qquad ...(Equation 13)$$

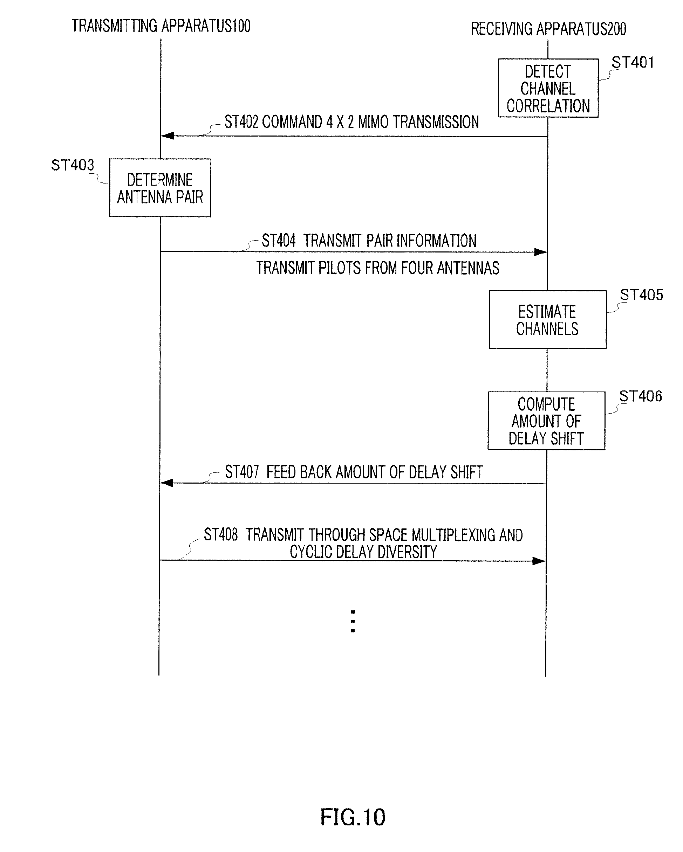

Next, the steps of communications between transmitting apparatus 100 shown in FIG.2 and receiving apparatus 200 shown in FIG. 6 will be explained using FIG.10. In FIG.10, in ST401, channel correlation detecting section 204 of receiving apparatus 200 determines that the channel correlation value calculated from channel estimation information exceeds a predetermined threshold, and, in ST402, channel correlation detecting section 204 transmits the control signal commanding 4 × 2 MIMO transmission to transmitting apparatus 100.

In ST403, based on the control signal transmitted from receiving apparatus 200, antenna pair determining section 106 of transmitting apparatus 100 determines a combination of antennas using for 4 × 2 MIMO transmission, and, in ST404, antenna pair determining section 106 transmits pair information to receiving apparatus 200 and transmits pilots from the four antennas.

In ST405, channel estimating section 203 of receiving apparatus 200 performs a channel estimation using the pilots transmitted from transmitting apparatus 100, and, in ST406, delay shift amount computing section 205 calculates amounts of delay shift using the pair information outputted from transmitting apparatus 100 and the channel estimation information.

In ST407, delay shift amount computing section 205 feeds back the amounts of delay shift to transmitting apparatus 100, and, in ST408, using the amounts of delay shift fed back from receiving apparatus 200, transmitting apparatus 100 combines cyclic sample delay diversity and SDM and transmits data to receiving apparatus 200.

By transmitting data through cyclic sample delay diversity using the amounts of delay shift calculated as such and by combining channels in receiving apparatus 200, frequency selectivity can be produced. This makes it possible to reduce channel correlations of reception channels.

In this way, according to Embodiment 1, when $4 \times 2$ MIMO transmission is performed due to high channel correlations, which antenna pairs are used is determined in the transmitting apparatus, a $2 \times 2$ combined channel matrix is generated using pair information showing a combination of antenna pairs and channel estimation information, cyclic sample delay is performed of respective two pairs with amounts of delay shift which determinant of this combined channel matrix is calculated as an evaluation function, and transmission is performed through a combination of cyclic sample delay diversity and SDM, so that it is possible to produce frequency selectivity to reduce the channel correlation even when the channel correlation is high, thereby improving channel capacity. Moreover, it is possible to improve the amount of feedback compared with eigenmode transmission feeding back weights.

(Embodiment 2)

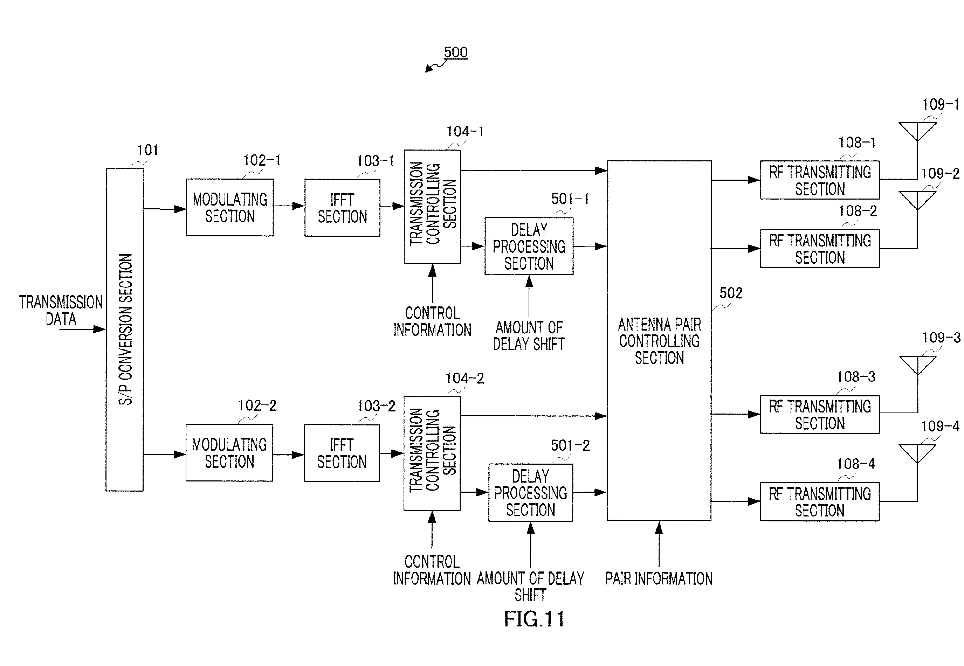

FIG.11 is a block diagram showing the configuration of transmitting apparatus 500 according to Embodiment 2 of the present invention. FIG.11 is different from FIG.2 in that antenna pair determining section 106 is removed, delay processing sections 105-1 and 105-2 are changed to delay processing sections 501-1 and 501-2 and antenna pair controlling section 107 is changed to antenna pair controlling section 502.

In FIG.11, delay processing sections 501-1 and 501-2, where the amount of delay shift is set in advance, applies a cyclic sample delay of OFDM signals outputted from corresponding transmission controlling sections 104-1 and 104-2. The amount of delay shift set in advance may be sample time period exceeding a CP length $L_{cp}$. The OFDM signals to which the cyclic sample delay is applied are outputted to antenna pair controlling section 502.

Antenna pair controlling section 502 acquires pair information from receiving apparatus 600, which will be explained later, and, based on the acquired pair information, assigns to antennas 109-1 to 109-4 the OFDM signals outputted from transmission controlling sections 104-1 and 104-2 and when OFDM signals are outputted from delay processing sections 501-1 and 501-2, the OFDM signals to which the cyclic sample delay are applied.

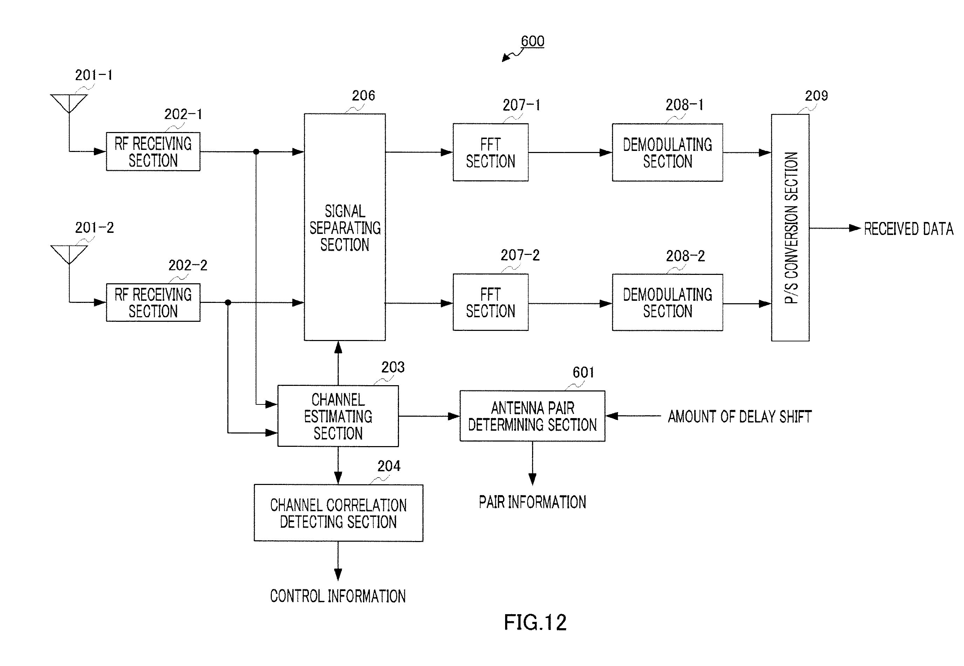

FIG.12 is a block diagram showing the configuration of receiving apparatus 600 according to Embodiment 2 of the present invention. FIG.12 is different from FIG.6 in that antenna pair determining section 601 is added. In FIG. 12, antenna pair determining section 601 generates combined channel matrices on a per antenna basis based on the amount of delay shift set in advance and channel estimation information outputted from channel estimating section 203. Then, antenna pair determining section 601 determines the antenna pair which maximizes the determinant of the generated combined channel matrix, and feeds back the pair information showing the determined antenna pair to transmitting apparatus 500 shown in FIG. 11.

The pair information can express with few bits, for example, for the number of antenna pairs shown in FIG.3, it is possible to restrict about three bits. Accordingly, it is possible to reduce the amount of feedback and to improve channel capacity.

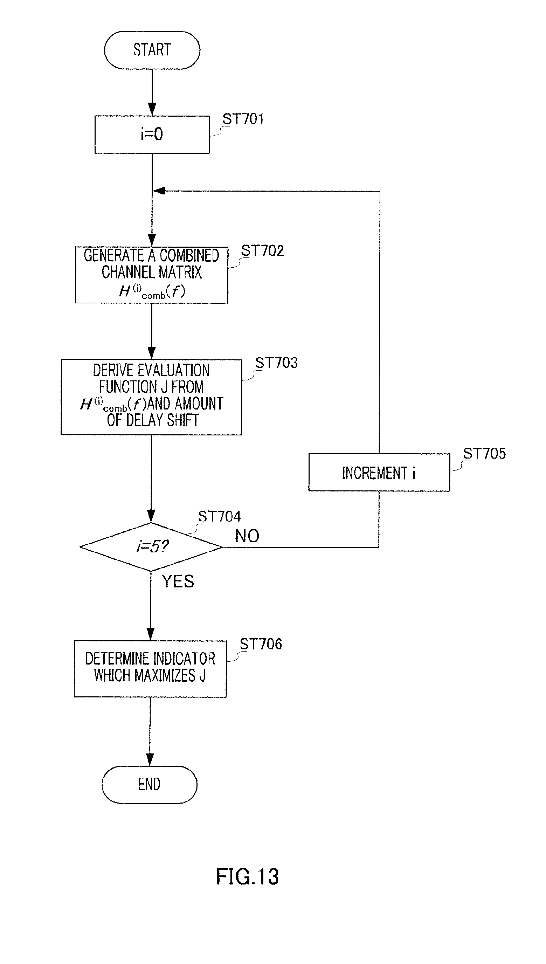

FIG.13 is a flowchart showing the antenna pair decision steps of antenna pair determining section 601 shown in FIG.12. In this figure, in ST701, antenna pair determining section 601 sets an indicator i = 0, and, in ST702, generates a combined channel matrix $H^{(i)}_{comb}(f)$.

In ST703, evaluation function J is derived from $H^{(i)}_{comb}(f)$ and the amount of delay shift, and, in ST704, whether or not i is 5 is determined. If it is determined i is 5, the step shifts to ST706, and if it is determined i is not 5, the step shifts to ST705.

In ST705, i is incremented, and the processing from ST702 to ST704 is repeated again until it is determined i is 5.

In ST706, in the evaluation function J derived with respect to antenna pairs shown in indicators i = 0 to 5, antenna pair determining section 601 determines the indicator which maximizes J as antenna pair information.

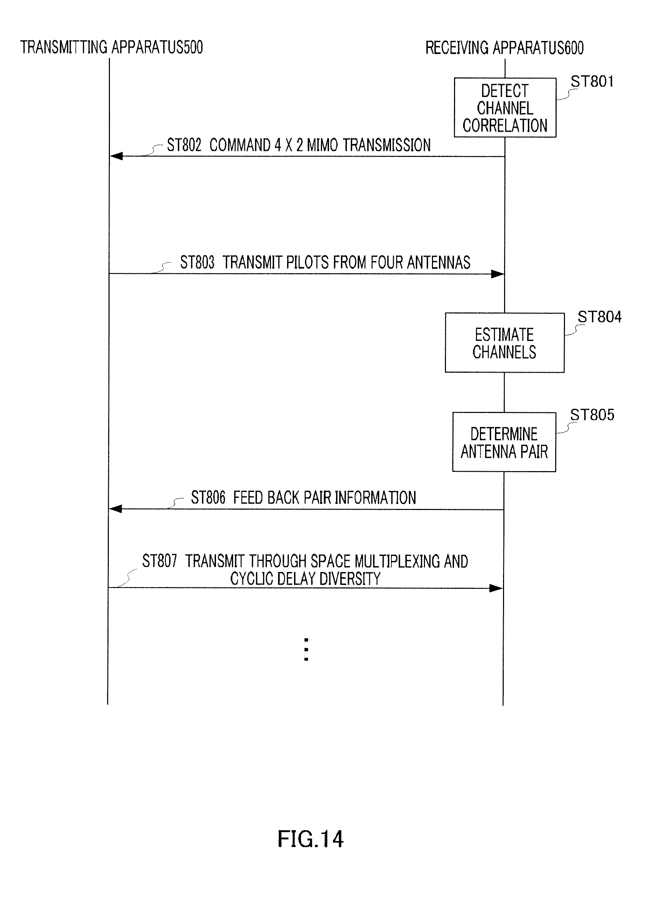

Next, the steps of communications between transmitting apparatus 500 shown in FIG.11 and receiving apparatus 600 shown in FIG.12 will be described using FIG.14. In FIG.14, in ST801, channel correlation detecting section 204 of receiving apparatus 600 determines that a channel correlation value calculated from channel estimation information exceeds a predetermined threshold, and, in ST802, channel correlation detecting section 204 transmits control signal commanding 4 × 2 MIMO transmission to transmitting apparatus 500.

In ST803, transmitting apparatus 500 transmits pilots from the four antennas, and, in ST804, channel estimating section 203 of receiving apparatus 600 performs a channel estimation using the pilots transmitted from transmitting apparatus 500.

In ST805, antenna pair determining section 601 determines the antenna pair using the amount of delay shift set in advance and the channel estimation information, and, in ST806, antenna pair determining section 601 feeds back pair information to transmitting apparatus 500.

In ST807, using the pair information fed back from receiving apparatus 600 and the amount of delay shift set in advance, transmitting apparatus 500 combines cyclic sample delay diversity and SDM and transmits data to receiving apparatus 600.

In this way, according to Embodiment 2, an amount of delay shift is set in advance, combined channel matrices are generated from the amount of delay shift and channel estimation information for all combinations of antenna pairs in the receiving apparatus, and pair information showing the antenna pair which maximizes an evaluation function defined as a determinant of the generated combined channel matrices, is fed back to the transmitting apparatus, so that it is possible to reduce an amount of feedback and improve channel capacity.

Although a case has been explained with the present embodiment here where the amount of delay shift is set in advance in transmitting apparatus 500 and receiving apparatus 600, respectively, the amount of delay shift may be only set in transmitting apparatus 500 and may be reported to receiving apparatus 600 with pilots.

(Embodiment 3)

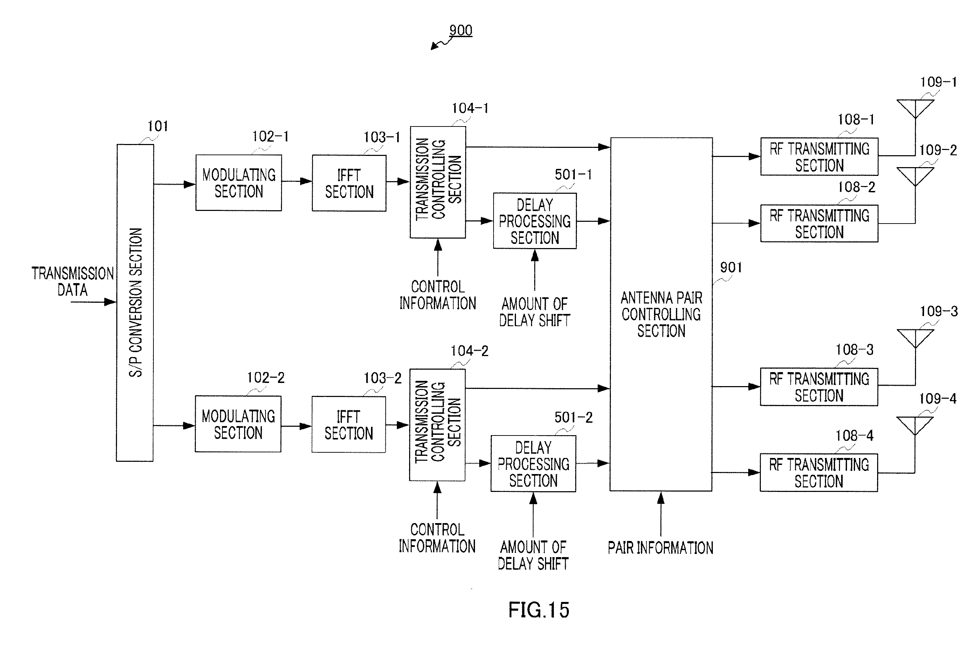

FIG.15 is a block diagram showing the configuration of transmitting apparatus 900 according to Embodiment 3 of the present invention. FIG.15 is different from FIG.2 in that antenna pair determining section 106 is removed and antenna pair controlling section 107 is changed to antenna pair controlling section 901.

In FIG.15, antenna pair controlling section 901 acquires pair information from receiving apparatus 1000, which will be explained later, and, based on the acquired pair information, assigns OFDM signals outputted from transmission controlling sections 104-1 and 104-2 and the OFDM signals to which a cyclic sample delay is applied when the OFDM signals are outputted from delay processing sections 501-1 and 501-2, to antennas 109-1 to 109-4, respectively.

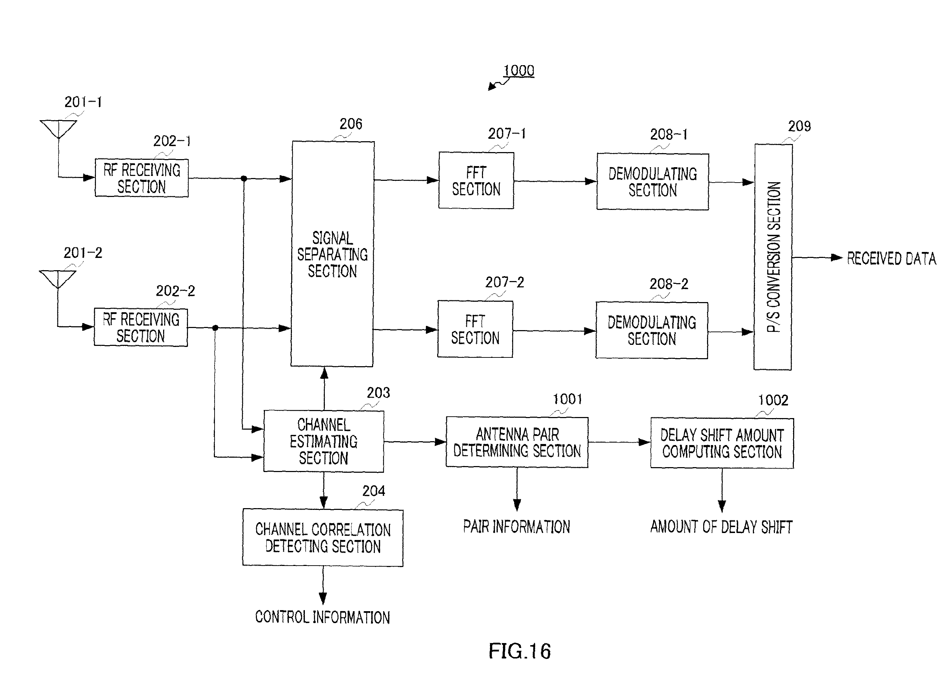

FIG.16 is a block diagram showing the configuration of receiving apparatus 1000 according to Embodiment 3 of the present invention. FIG.16 is different from FIG.6 in that antenna pair determining section 1001 and delay shift amount computing section 1002 are added.

In FIG. 16, antenna pair determining section 1001 calculates a channel correlation value using the channel estimation information outputted from channel estimating section 203 and determines the antenna pair with the highest channel correlation value. If the channel correlation value is p, the following equation 14 is represented:

[14]

$$\rho = \frac{E[h_{ij}^{*}h_{xy}]}{\sqrt{E[\left|h_{ij}\right|^{2}]}\sqrt{E[\left|h_{xy}\right|^{2}]}} \quad \ldots (\text{Equation 14})$$

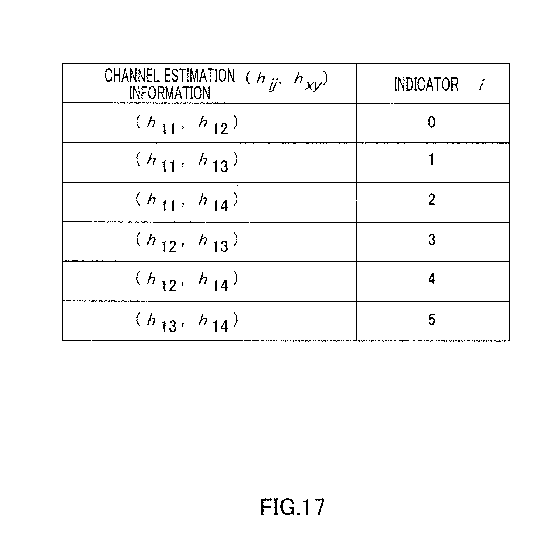

In equation 14 above, E [ ] represents ensemble average, and $h_{ij}$ and $h_{xy}$ represent elements of channel estimation information. As shown in FIG.17, antenna pair determining section 1001 provides correspondence relationships between the indicators and the channel estimation information ($h_{ij}$, $h_{xy}$) using calculation of the channel correlation value p. That is, based on the table in FIG.17, antenna pair determining section 1001 determines the indicator that corresponds to the combination of the channel estimation information which maximizes the calculated channel correlation value p. The determined indicator is fed back to transmitting apparatus 900. Incidentally, the indicators shown in FIG.17 are the same as in FIG.3.

Based on the pair information outputted from antenna pair determining section 1001 and the channel estimation information outputted from channel estimating section 203, delay shift amount computing section 1002 calculates amounts of delay shift per stream. The calculated amounts of delay shift are fed back to transmitting apparatus 900.

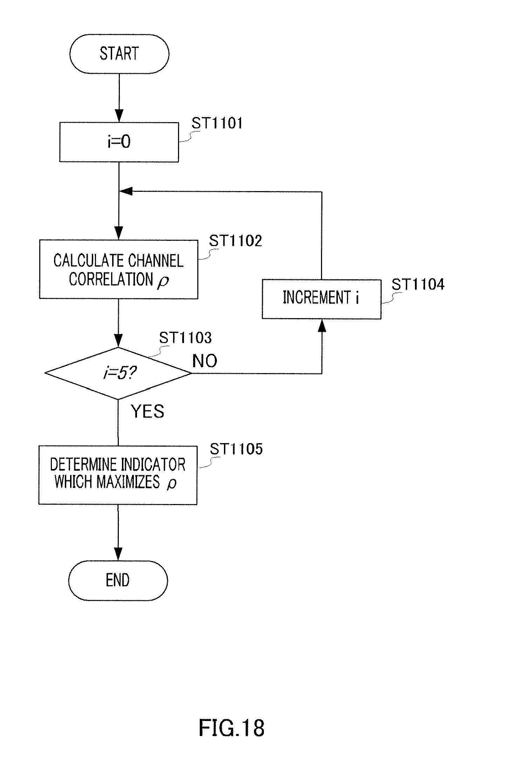

FIG.18 is a flow chart showing the antenna pair deciding steps in antenna pair determining section 1001. In this figure, in ST1101, antenna pair determining section 1001 sets the indicator i with 0, and, in ST1102, calculates channel correlation value p.

In ST1103, antenna pair determining section 1001 determines whether or not i is 5. If it is determined i is 5, the step shifts to ST1105, and if it is determined i is not 5, the step shifts to ST1104.

In ST1104, i is incremented and the processing in ST1102 and ST1103 is repeated again till it is determined i is 5 .

In ST1105, in the channel correlation value p derived with respect to the channel estimation information shown in indicators i = 0 to 5, antenna pair determining section 1001 determines the indicator which maximizes p, as antenna pair information.

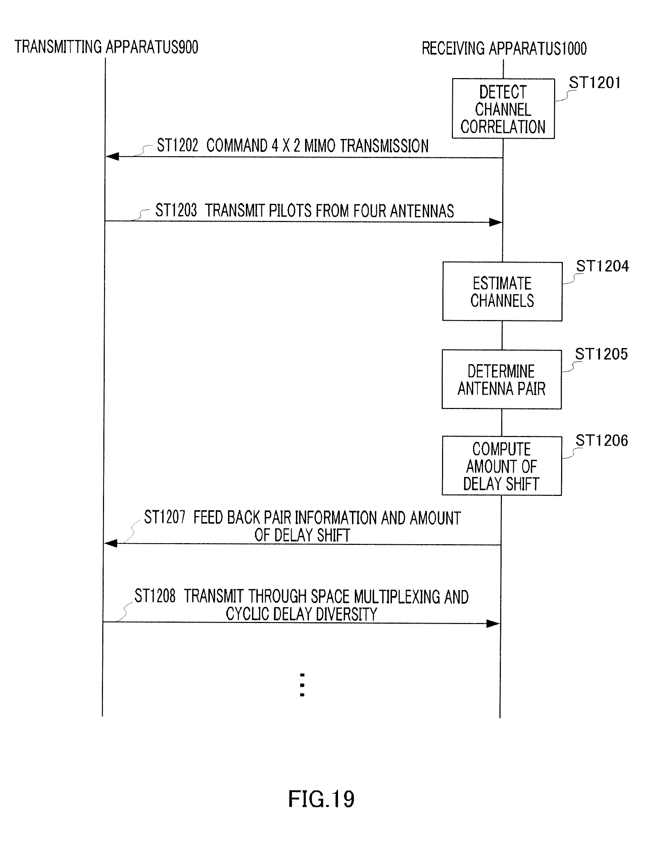

Next, the steps of communications between transmitting apparatus 900 shown in FIG.15 and receiving apparatus 1000 shown in FIG.16 will be explained using FIG.19. In FIG.19, in ST1201, channel correlation detecting section 204 of receiving apparatus 1000 determines that a channel correlation value calculated from channel estimation information exceeds a predetermined threshold, and, in ST1202, channel correlation detecting section 204 transmits control signal commanding 4x2 MIMO transmission to transmitting apparatus 900.

In ST1203, transmitting apparatus 900 transmits pilots from the four antennas, and, in ST1204, channel estimating section 203 of receiving apparatus 1000 performs a channel estimation using the pilots transmitted from transmitting apparatus 900.

In ST1205, antenna pair determining section 1001 determines an antenna pair based on channel correlation value p calculated from the channel estimation information, and, in ST1206, delay shift amount computing section 1002 generates a $2 \times 2$ combined channel matrix using the channel estimation information and the pair information determined in ST1205. Then, defining the generated combined channel matrix as an evaluation function, delay shift amount computing section 1002 calculates the amounts of delay shift which maximizes the evaluation function.

In ST1207, the pair information from antenna pair determining section 1001 and the amounts of delay shift from delay shift amount computing section 1002 are fed back to transmitting apparatus 900, and, in ST1208, using the pair information fed back from receiving apparatus 1000 and the amounts of delay shift set in advance, transmitting apparatus 900 combines cyclic sample delay diversity and SDM and transmits data to receiving apparatus 1000.

In this way, according to Embodiment 3, in the receiving apparatus, an antenna pair which maximizes channel correlation value is determined, combined channel matrices are generated from channel estimation information based on the determined antenna pair, amounts of delay shift that maximizes evaluation function defined as a determinant of the generated combined channel matrices is calculated, and pair information showing the antenna pair and the amounts of delay shift are fed back to the transmitting apparatus, so that it is possible to produce frequency selectivity and to reduce channel correlation, thereby improving channel capacity. Moreover, it is possible to reduce an amount of feedback, and to improve channel capacity.

(Embodiment 4)

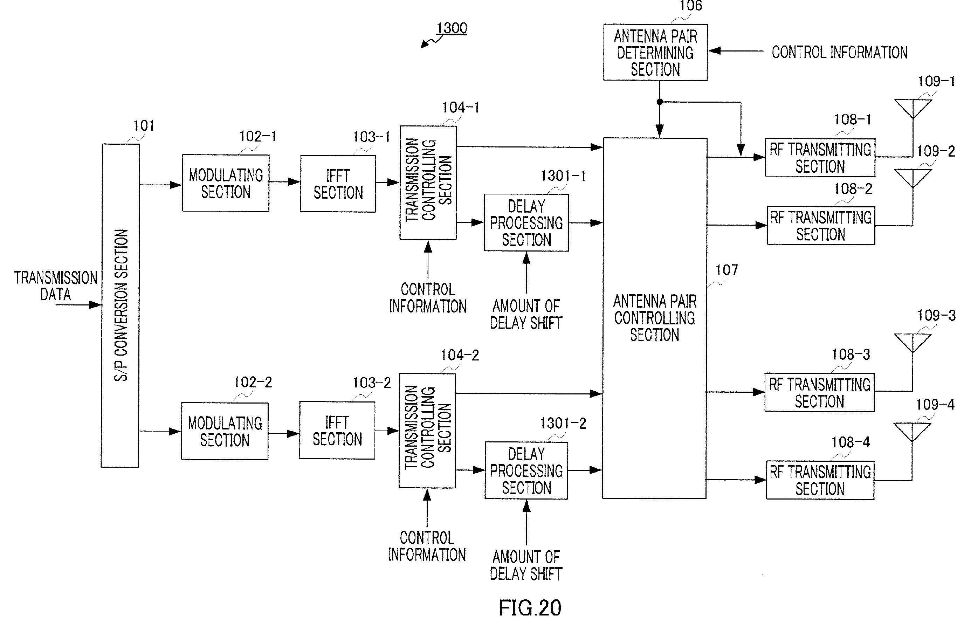

FIG.20 is a block diagram showing the configuration of transmitting apparatus 1300 according to Embodiment 4 of the present invention. FIG.20 is different from FIG.2 in that delay processing sections 105-1 and 105-2 are changed to delay processing sections 1301-1 and 1301-2.

Delay processing sections 1301-1 and 1301-2, in which an amount of delay shift is set in advance, apply a cyclic sample delay to OFDM signals outputted from transmission controlling sections 104-1 and 104-2. The amount of delay shift set in advance may be sample time period exceeding a CP length $L_{cp}$. The OFDM signals to which the cyclic sample delay is applied are outputted to antenna pair controlling section 107.

The configuration of the receiving apparatus according to Embodiment 4 is different only in that delay shift amount computing section 205 is removed in the configuration shown in FIG.6 according to Embodiment 1, and will be explained with reference to FIG.6, and the explanation in detail will be omitted.

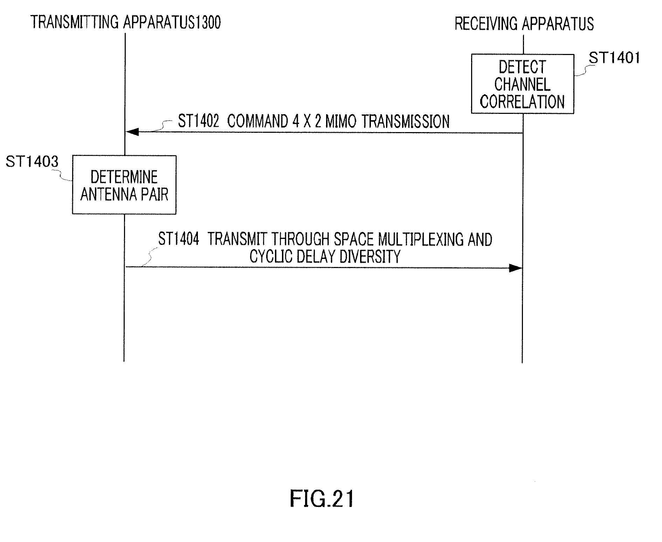

FIG.21 illustrates a sequence diagram showing the steps of communications between transmitting apparatus 1300 shown in FIG.20 and the receiving apparatus according to Embodiment 4. In this figure, in ST1401, channel correlation detecting section 204 of the receiving apparatus determines that channel correlation value calculated from channel estimation information exceeds a predetermined threshold, and, in ST1402, channel correlation detecting section 204 transmits control signal commanding $4 \times 2$ MIMO transmission to transmitting apparatus 1300.

In ST1403, antenna pair determining section 106 of transmitting apparatus 1300 determines an antenna pair based on control information transmitted from the receiving apparatus, and, in ST1404, using the pair information and the amount of delay shift set in advance, transmitting apparatus 1300 combines cyclic sample delay diversity and SDM and transmits data to the receiving apparatus.

In this way, according to Embodiment 4, calculation of an amount of delay shift and decision of an antenna pair are performed in the transmitting apparatus, so that it is possible to reduce an amount of information fed back from the receiving apparatus and to improve channel capacity.

Embodiments of the present invention have been described.

Although cases have been described with embodiments here to presume a $4 \times 2$ MIMO system when the transmitting apparatus has four antennas and the receiving apparatus has two antennas, the present invention is not limited to this, and the transmitting apparatus may have more antennas than the receiving apparatus.

Moreover, although cases have been described with embodiments here to select the antenna pair with the highest channel correlation, the present invention is not limited to this, and it is equally possible to select the antenna pair at random and to fix the antenna pair.

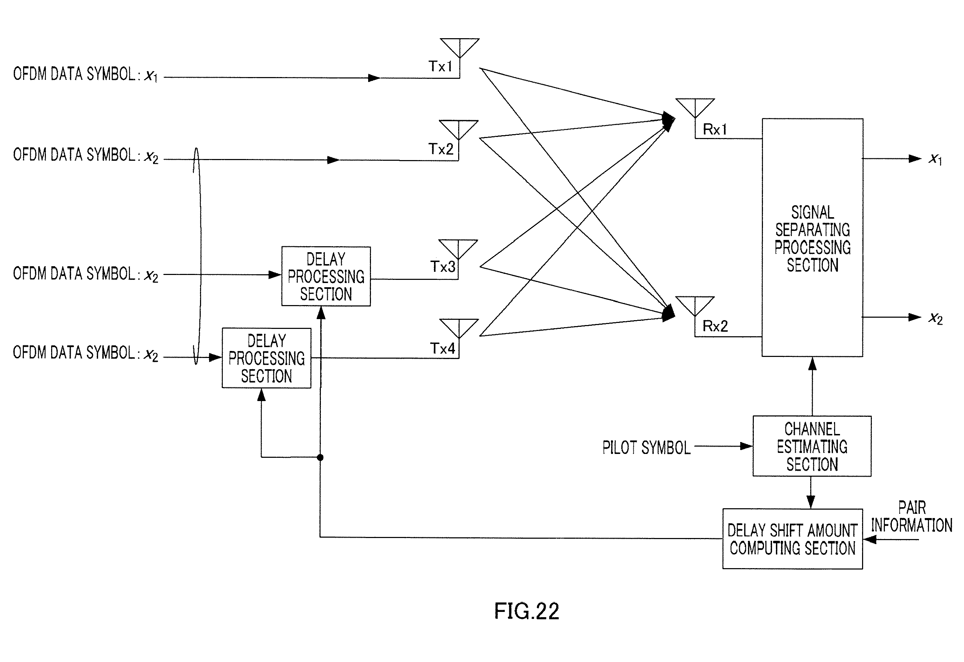

Moreover,althoughcaseshavebeen described with the embodiments here where cycle sample delay diversity is respectively performed on OFDM signals of two sequences and is combined with SDM, the present invention is not limited to this, as shown in FIG.22, one sequence for SDM transmission, that is, OFDM data symbol $x_1$ transmitted from transmitting antenna Tx1, is transmitted without performing cyclic sample delay diversity, and other sequences, that is, only OFDM data symbol $x_2$ transmitted from transmitting antenna Tx2, OFDM data symbol $x_2$ transmitted from transmitting antenna Tx3 and OFDM data symbol $x_2$ transmitted from transmitting antenna Tx4 can be applied to cyclic sample delay diversity. By applying respectively different amounts of delay shift to OFDM data symbol $x_2$ transmitted from transmitting antenna Tx3 and OFDM data symbol $x_2$ transmitted from transmitting antenna Tx4 in the delay processing sections, OFDM data symbols $x_2$ transmitted from transmitting antennas Tx2 to Tx4 are combined at the receiving side, and cyclic sample delay diversity is realized.

Moreover, although cases have been described with the embodiments above where the present invention is configured by hardware, the present invention may be implemented by software.

Each function block employed in the description of the aforementioned embodiment may typically be implemented as an LSI constituted by an integrated circuit. These may be individual chips or partially or totally contained on a single chip. "LSI" is adopted here but this may also be referred to as "IC, " "system LSI, " "super LSI" or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI' s as a result of the advancement of semiconductor technology or a derivative other technology, it is naturally also possible to carry out function block integration using this technology. Application of biotechnology is also possible.

The present application is based on Japanese Patent Application No.2005-321562, filed on November 4, 2005, the entire content of which is expressly incorporated by reference herein.

Industrial Applicability

The wireless transmitting apparatus, the wireless receiving apparatus, the wireless communication method, and the wireless communication system according to the present invention are applicable to, for example, a MIMO communication system that has more antennas at the transmitting side than at the receiving side.

**Claims**

1. A wireless transmitting apparatus comprising:

   a plurality of transmitting antennas;
   a converting section that converts a transmission signal into transmission signals of a plurality of sequences;
   a transmission controlling section that duplicates the transmission signals of the plurality of sequences on a per sequence basis;
   a delay processing section that performs cyclic delay processing of the duplicated transmission signals; and
   a transmitting section that respectively transmits the transmission signals of duplicated sources and the transmission signals to which the cyclic delay processing is applied, from the transmitting antennas.

2. The wireless transmitting apparatus according to claim 1, further comprising an antenna pair determining section that determines that a pair of the transmitting antennas respectively transmitting the transmission signals that are the duplicated sources and the transmission signals to which the cyclic delay processing is applied, on a per stream basis as an antenna pair of high channel correlation.

3. The wireless transmitting apparatus according to claim 1, wherein, based on information showing the pair of the transmitting antennas determined in a receiving apparatus which is a communicating party, the transmitting section respectively transmits the transmission signals of the duplicated sources and the transmission signals to which the cyclic delay processing is applied, from the transmitting antennas.

4. The wireless transmitting apparatus according to claim 1, wherein the delay processing section that applies the cyclic delay processing of amounts of delay shift calculated in the receiving apparatus which is the communicating party.

5. The wireless transmitting apparatus according to claim 1, wherein the delay processing section applies the cyclic delay processing of a greater amount of delay shift than a length of a cyclic prefix.

6. A wireless receiving apparatus comprising:

a channel estimating section that performs a channel estimation using pilots transmitted from a transmitting apparatus which is a communicating party; and
an antenna pair determining section that determines a pair of the transmission antennas with a highest channel correlation calculated from a channel estimation value and feeds back pair information showing the determined pair of antennas to the transmitting apparatus.

7. The wireless receiving apparatus according to claim 6, further comprising a delay shift amount computing section that calculates a determinant of a channel matrix provided with the channel estimation value based on the antenna pair information, finds amounts of delay shift using the calculated channel matrix and feeds back the found amounts of delay shift to the transmitting apparatus.

8. The wireless receiving apparatus according to claim 7, wherein the delay shift amount computing section further comprising:

a combined channel matrix generating section that generates a channel matrix of combined channels from the channel estimation value based on the antenna pair information;
a determinant calculating section that calculates a channel determinant from the combined channel matrix; and
a delay shift amount calculating section that defines the channel determinant as an evaluation function and calculates the amounts of delay shift that maximize the evaluation function.

9. A wireless communication method comprising:

a transmission controlling step of duplicating transmission signals of a plurality of sequences on a per sequence basis;
a delay processing step of applying cyclic delay processing of the duplicated transmission signals; and
a transmitting step of respectively transmitting the transmission signals of a duplicated sources and the transmission signals to which the cyclic delay processing is applied, from a plurality of transmitting antennas.

10. A wireless communication system comprising:

a receiving apparatus that comprises:

a plurality of receiving antennas;
a channel estimating section that performs a channel estimation using pilots transmitted from a transmitting apparatus which is a communicating party; and
a delay shift amount computing section that calculates a determinant of a channel matrix provided with the channel estimation value based on the antenna pair information showing a pair of transmission antennas with a highest channel correlation calculated from a channel estimation value, finds amounts of delay shift using the calculated determinant and feeds back the found amounts of delay shift to the transmitting apparatus; and

a transmitting apparatus that comprises:

a plurality of transmitting antennas which numbers are greater than the receiving antennas;
a converting section that converts a transmission signal into transmission signals of a plurality of sequences;
a transmission controlling section that duplicates the transmission signals of the plurality of sequences on a per sequence basis;
a delay processing section that performs cyclic delay processing on the duplicated transmission signals, the cyclic delay processing of the amounts of delay shift fed back from the receiving apparatus; and

a transmitting section that, based on the pair information, respectively transmits the transmission signals of duplicated sources and the transmission signals to which the cyclic delay processing is applied, from the transmitting antennas.

FIG.1 （ PRIOR ART ）

FIG.2

EP 1 931 071 A1

| TRANSMISSION SIGNAL | ANTENNA PAIR | TRANSMISSION SIGNAL | ANTENNA PAIR | INDICATOR |
|---|---|---|---|---|
| x1 | (Tx1,Tx2) | x2 | (Tx3, Tx4) | 0 |
| x1 | (Tx1,Tx3) | x2 | (Tx2, Tx4) | 1 |
| x1 | (Tx1,Tx4) | x2 | (Tx2, Tx3) | 2 |
| x1 | (Tx2,Tx3) | x2 | (Tx1, Tx4) | 3 |
| x1 | (Tx2,Tx4) | x2 | (Tx1, Tx3) | 4 |
| x1 | (Tx3,Tx4) | x2 | (Tx1, Tx2) | 5 |

FIG.3

EP 1 931 071 A1

FIG.4

FIG.5

FIG.6

EP 1 931 071 A1

PAIR INFORMATION

205: DELAY SHIFT AMOUNT COMPUTING SECTION

CHANNEL ESTIMATION INFORMATION →

251

COMBINED CHANNEL
MATRIX GENERATING
SECTION

252

DETERMINANT
COMPUTING
SECTION

253

DELAY SHIFT AMOUNT
CALCULATING SECTION

AMOUNT OF DELAY SHIFT

FIG.7

FIG.8

FIG.9

TRANSMITTING APPARATUS100

RECEIVING APPARATUS200

DETECT CHANNEL CORRELATION — ST401

ST402 COMMAND 4 X 2 MIMO TRANSMISSION

ST403 — DETERMINE ANTENNA PAIR

ST404 TRANSMIT PAIR INFORMATION

TRANSMIT PILOTS FROM FOUR ANTENNAS

ESTIMATE CHANNELS — ST405

COMPUTE AMOUNT OF DELAY SHIFT — ST406

ST407 FEED BACK AMOUNT OF DELAY SHIFT

ST408 TRANSMIT THROUGH SPACE MULTIPLEXING AND CYCLIC DELAY DIVERSITY

FIG.10

FIG.11

FIG.12

START

i=0 — ST701

GENERATE A COMBINED
CHANNEL MATRIX
$H^{(i)}{}_{comb}(f)$ — ST702

DERIVE EVALUATION
FUNCTION J FROM
$H^{(i)}{}_{comb}(f)$ AND AMOUNT
OF DELAY SHIFT — ST703

INCREMENT i — ST705

ST704
$i=5?$ — NO

YES

DETERMINE INDICATOR
WHICH MAXIMIZES J — ST706

END

FIG.13

TRANSMITTING APPARATUS500                    RECEIVING APPARATUS600

DETECT
CHANNEL      ST801
CORRELATION

ST802  COMMAND 4 X 2 MIMO TRANSMISSION

ST803  TRANSMIT PILOTS FROM FOUR ANTENNAS

ESTIMATE      ST804
CHANNELS

DETERMINE      ST805
ANTENNA PAIR

ST806  FEED BACK PAIR INFORMATION

ST807  TRANSMIT THROUGH SPACE MULTIPLEXING AND
CYCLIC DELAY DIVERSITY

FIG.14

900

TRANSMISSION DATA

S/P CONVERSION SECTION
101

MODULATING SECTION
102-1

IFFT SECTION
103-1

TRANSMISSION CONTROLLING SECTION
104-1

DELAY PROCESSING SECTION
501-1

CONTROL INFORMATION

AMOUNT OF DELAY SHIFT

ANTENNA PAIR CONTROLLING SECTION
901

RF TRANSMITTING SECTION
108-1

RF TRANSMITTING SECTION
108-2

109-1

109-2

MODULATING SECTION
102-2

IFFT SECTION
103-2

TRANSMISSION CONTROLLING SECTION
104-2

DELAY PROCESSING SECTION
501-2

CONTROL INFORMATION

AMOUNT OF DELAY SHIFT

PAIR INFORMATION

RF TRANSMITTING SECTION
108-3

RF TRANSMITTING SECTION
108-4

109-3

109-4

FIG.15

FIG.16

EP 1 931 071 A1

| CHANNEL ESTIMATION $(h_{ij}, h_{xy})$ INFORMATION | INDICATOR $i$ |
|---|---|
| $(h_{11}, h_{12})$ | 0 |
| $(h_{11}, h_{13})$ | 1 |
| $(h_{11}, h_{14})$ | 2 |
| $(h_{12}, h_{13})$ | 3 |
| $(h_{12}, h_{14})$ | 4 |
| $(h_{13}, h_{14})$ | 5 |

FIG.17

START

ST1101
i=0

ST1102
CALCULATE CHANNEL
CORRELATION $\rho$

ST1104
INCREMENT i

ST1103
$i=5?$

NO

YES

ST1105
DETERMINE INDICATOR
WHICH MAXIMIZES $\rho$

END

FIG.18

TRANSMITTING APPARATUS900                          RECEIVING APPARATUS1000

| DETECT CHANNEL CORRELATION | ST1201

ST1202  COMMAND 4 X 2 MIMO TRANSMISSION

ST1203  TRANSMIT PILOTS FROM FOUR ANTENNAS

| ESTIMATE CHANNELS | ST1204

| DETERMINE ANTENNA PAIR | ST1205

| COMPUTE AMOUNT OF DELAY SHIFT | ST1206

ST1207  FEED BACK PAIR INFORMATION AND AMOUNT OF DELAY SHIFT

ST1208  TRANSMIT THROUGH SPACE MULTIPLEXING AND CYCLIC DELAY DIVERSITY

FIG.19

FIG.20

EP 1 931 071 A1

TRANSMITTING APPARATUS1300                    RECEIVING APPARATUS

DETECT
CHANNEL          ST1401
CORRELATION

ST1402  COMMAND 4 X 2 MIMO TRANSMISSION

ST1403
DETERMINE
ANTENNA PAIR

ST1404  TRANSMIT THROUGH SPACE MULTIPLEXING AND
CYCLIC DELAY DIVERSITY

FIG.21

FIG.22

**INTERNATIONAL SEARCH REPORT**

| | International application No. |
|---|---|
| | PCT/JP2006/322016 |

A. CLASSIFICATION OF SUBJECT MATTER
*H04J15/00(2006.01)i, H04B7/04(2006.01)i, H04J11/00(2006.01)i*

According to International Patent Classification (IPC) or to both national classification and IPC

B. FIELDS SEARCHED

Minimum documentation searched (classification system followed by classification symbols)
H04J15/00, H04B7/04, H04J11/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2005-210690 A (Toshiba Corp.),<br>04 August, 2005 (04.08.05),<br>Par. Nos. [0025] to [0031], [0078] to [0082];<br>Figs. 1, 2, 12<br>& US 2005/163081 A1 & EP 1548958 A2 | 1,9<br>3<br>2,4-8,10 |
| Y<br>A | JP 2004-194262 A (NTT Docomo Inc.),<br>08 July, 2004 (08.07.04),<br>Par. Nos. [0028] to [0104]; Figs. 1 to 7<br>(Family: none) | 3<br>2,5,7,10 |
| A | JP 2005-203856 A (Nippon Telegraph And<br>Telephone Corp.),<br>28 July, 2005 (28.07.05),<br>Full text; all drawings<br>(Family: none) | 8 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>20 November, 2006 (20.11.06) | Date of mailing of the international search report<br>28 November, 2006 (28.11.06) |
|---|---|
| Name and mailing address of the ISA/<br>Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003528527 A
- JP 2005321562 JP